# EUROPÄISCHE PATENTSCHRIFT

(11) **EP 1 134 410 B1**
(45) Veröffentlichungstag und Bekanntmachung des Hinweises auf die Patenterteilung: **08.12.2004**
(21) Anmeldenummer: 00105677.9
(22) Anmeldetag: 17.03.2000
(51) Int. Cl.: F03D 11/00, F03D 11/04

(54) **Offshore-Windkraftanlage**
Offshore wind turbine
Eolienne marine

(43) Veröffentlichungstag der Anmeldung: 19.09.2001
(73) Patentinhaber: General Electric Company, Schenectady, NY 12345 (US)
(72) Erfinder: Weitkamp, Roland, 49191 Belm (DE)
(74) Vertreter: Hilleringmann, Jochen, Dipl.-Ing.

(56) Entgegenhaltungen:
- WO-A-99/02856
- DE-A- 3 808 536
- US-A- 4 771 971

## Beschreibung

Die Erfindung betrifft eine Windkraftanlage, die sich insbesondere für den Offshore-Betrieb eignet, wie zum Biespiel im Dokument WO-A-9 902 856 gezeigt.

Um den Zugang zu Offshore-Windkraftanlagen insbesondere bei rauher See zu verbessern, geht man mehr und mehr dazu über, das an dem Turm drehbar gelagerte Maschinengehäuse mit einer Plattform zu versehen, die von einem Hubschrauber angeflogen werden kann. Auf dieser Plattform kann ein Hubschrauber entweder aufsetzen oder aber der Hubschrauber schwebt über der Plattform (sogenannte Hoisting-Plattform), um z.B. Wartungspersonal abzusetzen oder abzuholen. Auf diese Weise sind diese Windkraftanlagen aus der Luft "anfliegbar". Das Wartungspersonal ist darüber hinaus sogleich am Ort des Geschehens, nämlich am Maschinengehäuse und am Rotor, wo sich die meisten zu wartenden Bestandteile der Windkraftanlagen befinden. Allerdings bleibt es nicht aus, auch diejenigen elektrischen Komponenten, die sich im Regelfall unten im Turm in Höhe der Schiffsanlege-Plattform befinden (Schalteinrichtungen zum An- und Abkoppeln des Generators, Transformator, Umrichter etc.), warten bzw. austauschen zu müssen. Das Wartungspersonal muss dazu den Turm hinabsteigen, was als lästig und zeitaufwendig empfunden wird.

Es existieren bereits Windkraftanlagen, deren nahezu gesamten elektrischen Komponenten im Maschinengehäuse bzw. oben im Turm untergebracht sind. Aus Zeitgründen wird jedoch gefordert, die wartungsintensiven elektrischen Komponenten schnell austauschen zu können. Bei den bekannten Windkraftanlagen müssen diese Komponenten einzeln aus dem Maschinengehäuse bzw. Turm entfernt und gegen neue ausgetauscht werden. Dies setzt das Entkoppeln der elektrischen Verbindungen der einzelnen Komponenten untereinander sowie mit anderen Komponenten der Windkraftanlage voraus. Diese Art von Austausch ist recht zeit- und damit kostenintensiv.

Es ist bereits bekannt, bei Offshore-Windkraftanlagen mit lediglich einer unten am Turm angeordneten Schiffsanlege-Plattform auf dieser einen Container anzuordnen, der wartungsintensive elektrische Komponenten wie z.B. Hoch- und Mittelspannungsschalter, Transformatoren und/oder Umrichter sowie Steuereinrichtungen beinhaltet. Dieser Container kann im Störfall oder zu Wartungszwecken komplett gegen einen neuen ausgetauscht werden.

Der Erfindung liegt die Aufgabe zugrunde, eine Windkraftanlage zu schaffen, die im Hinblick auf sowohl die schnelle Behebung von Störungen als auch die Wartung der elektrischen Komponenten auch dann vorteilhaft ist, wenn sich das Personal der Windkraftanlage aus der Luft nähert.

Zur Lösung dieser Aufgabe wird mit der Erfindung eine Windkraftanlage, insbesondere Offshore-Windkraftanlage vorgeschlagen, die versehen ist mit
- einem Turm,
- einem am Turm drehbar gelagerten Maschinengehäuse,
- einem Rotor, der drehbar am Maschinengehäuse gelagert ist, und
- einer an dem Maschinengehäuse angebrachten Landeplattform zum Anfliegen durch einen Hubschrauber,
- elektrischen Betriebsmitteln.

Diese Windkraftanlage ist erfindungsgemäß gekennzeichnet durch
- einen Container, in dem zumindest Teile der elektrischen Betriebsmittel untergebracht sind, wobei
- der Container zu einer Seite (Ober- oder Unterseite, Seitenwand, Rückwand) des Maschinengehäuses benachbart zu diesem angeordnet ist.

Bei der erfindungsgemäßen Windkraftanlage befinden sich die Schalteinrichtungen zum wahlweisen Verbinden des Generators mit und Entkoppeln des Generators von dem elektrischen Spannungsversorgungsnetz in einem Container, der am Maschinengehäuse (neben, unterhalb, oberhalb) abnehmbar gelagert ist. Damit ist es zum einen möglich, zu Wartungszwecken sowie zu Zwecken der Beseitigung von Störfällen den gesamten Container gegen einen neuen auszutauschen, also die störanfälligen elektrischen Betriebsmittel komplett tauschen zu können. Darüber hinaus ist die Anordnung des Containers oben am Maschinengehäuse insoweit von Vorteil, als das per Hubschrauber ankommende Wartungspersonal sich nicht erst bis ans untere Ende des Turmes begeben muss, um an die Schalteinrichtungen zu gelangen, sondern diese sogleich wartungs- und austauschfreundlich im Container am Maschinengehäuse vorzufinden.

Unter einem "Container", wie er zur Unterbringung zumindest eines Teils der elektrischen Betriebsmittel der Windkraftanlage im Sinne dieser Erfindung verstanden werden soll, handelt es sich um einen Behälter aus insbesondere Metall, dessen Abmessungen nicht notwendigerweise mit den zu Transportzwecken bekannten Transportcontainer übereinstimmen muss. Auch ist es nicht zwingend erforderlich, dass der nach der Erfindung erforderliche Container stapelbar oder mit Beschlagelementen zum Zusammenwirken mit Lastzugelementen (Haken mit Seil oder Greifer) versehen sein muss. Allerdings ist letzteres sicherlich von Vorteil, wenn man daran denkt, dass der Container mittels einer Winde o.dgl. abgelassen werden können muss. Ferner soll mit dem Begriff "Landeplattform" im Sinne der Erfindung sowohl eine Plattform verstanden werden, auf der ein Hubschrauber landen kann, als auch eine so-genannte Hoisting-Plattform verstanden werden, über der der Hubschrauber zum Absetzen und Aufnehmen von Wartungspersonal in geringer Höhe schwebt. Schließlich wird im Sinne der Erfindung unter den elektrischen Betriebsmitteln der Windkraftanlage all diejenigen Komponenten verstanden, die entweder mechanische Energie in elektrische Energie umwandeln (z.B. Generator) oder mittels derer die elektrische Energie geschaltet, transformiert oder in anderer Weise verarbeitet wird.

Neben den Schalteinrichtungen sind im Container auch ein Transformator und zweckmäßigerweise auch eine Umrichtereinheit untergebracht. Der Transformator kann dann entfallen, wenn der Generator selbst die erforderliche Hoch- bzw. Mittelspannung erzeugt. Die Umrichtereinheit ist nur dann erforderlich, wenn der Generator für einen drehzahlvariablen Betrieb ausgelegt ist. Die Schalteinrichtungen selbst sind in erster Linie Nieder- und/oder Mittelund/oder Hochspannungsschalter, deren Funktionstüchtigkeit zu jedem Zeitpunkt des Betriebs der Windkraftanlage gewährleistet sein muss. Die verschiedenen Varianten sollen unter dem Begriff "Generatorsystem" verstanden werden.

Zweckmäßigerweise verfügt der Container über elektrische Anschlüsse, die über Verbindungsleitungen auf einfache Weise mit elektrischen Anschlüssen des Maschinengehäuses verbunden werden können. Damit ist die elektrische Entkopplung sowie Ankopplung des Containers an das Maschinengehäuse auf einfache Weise gewährleistet.

Die Anordnung des Containers am Maschinengehäuse ist vorteilhafterweise dergestalt gelöst, dass sich der Container unterhalb eines über das Maschinengehäuse überstehenden Teils der Landeplattform für den Hubschrauber befindet. Diese Positionierung hat darüber hinaus den Vorteil, dass der gesamte Container mittels einer im Hubschrauber angeordneten Winde abgelassen werden kann, wenn er getauscht werden muss. Diese Winde kann aber auch auf der Landeplatteform, am Maschinengehäuse oder am Turm angebracht werden. Die Anbringung der Winde z.B. außen am Turm in Höhe der Schiffsanlege-Plattform ist zu bevorzugen, da der Container, wenn er dann abgelassen werden muss, direkt auf ein Schiff abgelassen werden sollte und die Winde unten am Turm demzufolge von einer Person des Schiffspersonal, die sich auf der Schiffsanlege-Plattform befindet, installiert und bedient werden kann.

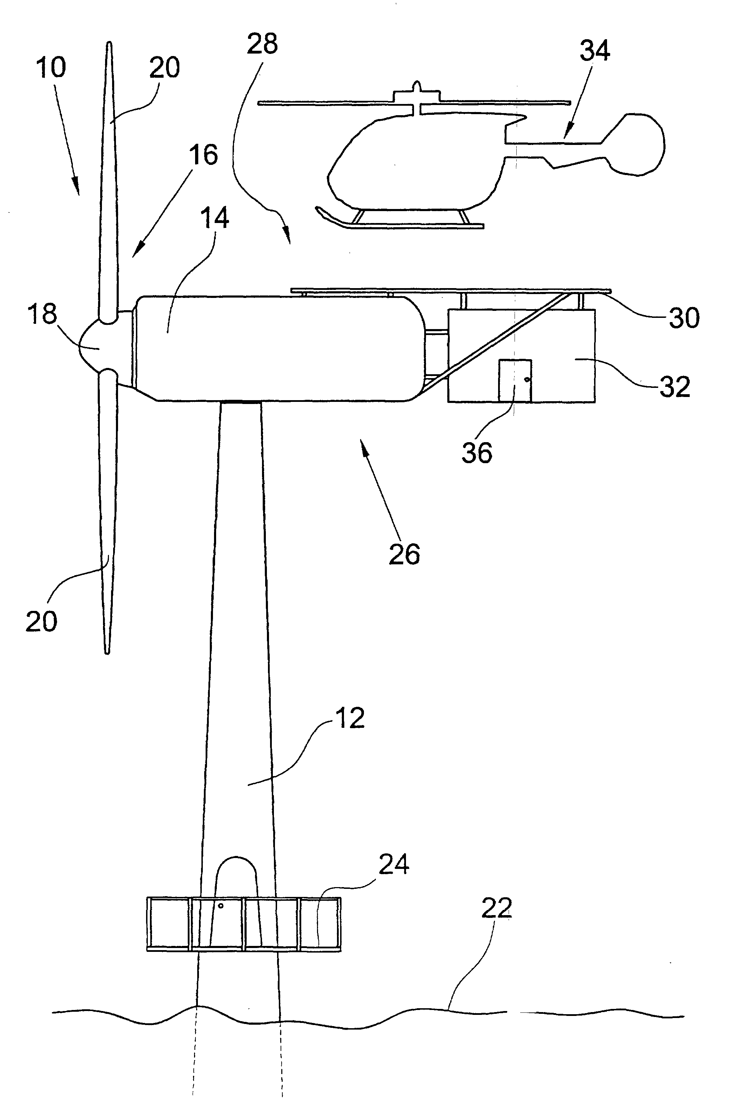

Nachfolgend wird die Erfindung anhand der Zeichnung näher erläutert.

In der Zeichnung ist in Seitenansicht eine Offshore-Windkraftanlage 10 dargestellt, die einen im Meeresgrund verankerten Turm 12 mit einem um eine Vertikalachse drehbaren Maschinengehäuse 14 am oberen Ende des Turmes 12 aufweist. Um eine Horizontalachse drehbar gelagert am Maschinengehäuse 14 ist der Rotor 16, der eine Nabe 18 und radial von dieser abstehende Rotorblätter 20 aufweist. Oberhalb des Meeresspiegels 22 befindet sich eine Plattform 24, die dann genutzt wird, wenn die Windkraftanlage 10 per Schiff angefahren wird.

An dem dem Rotor 16 abgewandten hinteren Ende 26 des Maschinengehäuses 14 befindet sich eine Hubschrauber-Landeplattform 28, die einen über das hintere Ende 26 des Maschinengehäuses 14 überstehenden Bereich 30 aufweist. Unterhalb dieses Bereiches 30 der Landeplattform 28 befindet sich ein Container 32, der mechanisch an der Landeplattform 28 und/oder dem Maschinengehäuse 14 gelagert ist. In dem Container 32 befinden sich die Schaltanlagen für den Generator (nicht dargestellt) sowie Umrichter und Transformatoren. Diese elektrischen Komponenten sind über ebenfalls nicht dargestellte elektrische Kabel mit dem Generator sowie anderen elektrischen Komponenten des Maschinengehäuses 14 verbunden. Allgemein ausgesprochen befinden sich also in dem Container zumindest teilweise die elektrischen Betriebsmittel der Windkraftanlage 10.

Der Vorteil der hier beschriebenen Windkraftanlage 10 besteht in dem einfachen Tauschen der elektrischen Komponenten des Containers 32 sowie der einfachen Zugänglichkeit dieser Komponenten direkt von einem auf der Landeplattform 28 gelandeten Hubschrauber 34. Zu diesem Zweck weist der Container 32 eine begehbare Öffnung 36 auf. Mittels einer Seilwinde (nicht dargestellt), die entweder am Maschinengehäuse 14, an der Landeplattform 28, der Schiffsanlege-Plattform 24, dem Turm 12 oder im Hubschrauber 34 angeordnet ist, lässt sich der Container 32 absenken, um ihn beispielsweise auf ein Schiff zu verladen. Alternativ dazu ist es natürlich auch möglich, dass der Hubschrauber 34 den auszutauschenden Container 32 direkt abtransportiert und ein weitere Hubschrauber einen neuen Container 32 anliefert.

Ferner kann der Container 32 auch zur Unterbringung des Generators dienen, wenn dieses im Maschinengehäuse 14 angeordnet ist und zu Zwecken des Austausches des ebenfalls im Maschinengehäuse 14 untergebrachten Getriebes zwischengelagert werden muss. Diese Zwischenlagerung kann entfallen, wenn der Generator im Container 32 untergebracht ist oder im Maschinengehäuse 14 ausreichend Platz zur Zwischenlagerung vorhanden ist, um das Getriebe trotz Unterbringung des Generators im Maschinengehäuse 24 auszuwechseln.

## Patentansprüche

1. Windkraftanlage, insbesondere Offshore-Windkraftanlage, mit
- einem Turm (12),
- einem am Turm (12) drehbar gelagerten Maschinengehäuse (14),
- einem Rotor, der drehbar am Maschinengehäuse (14) gelagert ist,
- einer an dem Maschinengehäuse (14) angebrachten Landeplattform (28) zum Anfliegen durch einen Hubschrauber (34) und
- elektrischen Betriebsmitteln,
**gekennzeichnet durch**
- einen Container (32), in dem zumindest Teile der elektrischen Betriebsmittel untergebracht sind, wobei
- der Container (32) zu einer Seite des Maschinengehäuses (14) benachbart zu diesem angeordnet ist.

2. Windkraftanlage nach Anspruch 1, **dadurch gekennzeichnet, dass** sich in dem Container die Schalteinrichtungen zum An- und Abkoppeln eines Generatorsystems an das bzw. von dem elektrischen Energieversorgungsnetz befinden.

3. Windkraftanlage nach Anspruch 2, **dadurch gekennzeichnet, dass** die Schalteinrichtungen Nieder- und/oder Mittel- und/oder HochspannungsSchalter aufweisen.

4. Windkraftanlage nach einem der Ansprüche 1 bis 3, **dadurch gekennzeichnet, dass** sich in dem Container (32) ein Transformator befindet.

5. Windkraftanlage nach einem der Ansprüche 1 bis 4, **dadurch gekennzeichnet, dass** sich in dem Container (32) eine Umrichtereinheit zum drehzahlvariablen Betrieb eines Generators befindet.

6. Windkraftanlage nach einem der Ansprüche 1 bis 5, **dadurch gekennzeichnet, dass** die Landeplattform (28) an zu mindestens einer Seite des Maschinengehäuses (14) über diesen übersteht und dass der Container (32) unterhalb des über das Maschinengehäuse (14) überstehenden Bereichs der Landeplattform (28) angeordnet ist.

7. Windkraftanlage nach Anspruch 6, **dadurch gekennzeichnet, dass** der Container (32) mechanisch mit dem Maschinengehäuse (14) und/oder mit der Landeplattform (28) lösbar verbunden ist.

8. Windkraftanlage nach einem der Ansprüche 1 bis 7, **dadurch gekennzeichnet, dass** der Container (32) mittels einer Seilwinde aus seiner zum Maschinengehäuse (14) benachbarten Position absenkbar oder in diese Position anhebbar ist.

9. Windkraftanlage nach Anspruch 8, **dadurch gekennzeichnet, dass** die Seilwinde an dem Maschinengehäuse (14), dem Turm oder der Landeplattform (28) anbringbar ist.

10. Windkraftanlage nach einem der Ansprüche 1 bis 9, **dadurch gekennzeichnet, dass** das Maschinengehäuse (14) einen Generator aufweist und dass der Generator in dem Container (32) zwecks Zwischenlagerung unterbringbar ist.

11. Windkraftanlage nach einem der Ansprüche 1 bis 10, **dadurch gekennzeichnet, dass** der Container komplett mittels eines Hubschraubers anund abtransportiert und/oder getauscht werden kann.

## Claims

1. Wind energy plant, in particular an offshore wind energy plant, comprising
a tower (12),
an engine housing (14) rotatably supported on the! tower (12),
a rotor rotatably supported at the engine housing (14),
a landing platform (28) secured to the machine housing (14) for approach by a helicopter (34), and
electric operating means,
**characterized by**
a container (32) accommodating at least a part of the electric operating means, wherein
the container (32) is arranged adjacent to the engine housing (14) on one side thereof.

2. Wind energy plant of claim 1, wherein the container accommodates the switching means for coupling and decoupling a generator system to or from the electric power supply network.

3. Wind energy plant of claim 2, wherein the switching means comprise low and/or medium and/or high voltage switches.

4. Wind energy plant of one of claims 1 to 3, wherein the container (32) houses a transformer.

5. Wind energy plant of one of claims 1 to 4, wherein the container (32) houses a converter unit for operating a generator at variable speeds.

6. Wind energy plant of one of claims 1 to 5, wherein the landing platform (28) projects beyond the engine housing (14) on at least one side thereof and the container (32) is arranged below the portion of the landing platform (28) projecting beyond the engine housing (14).

7. Wind energy plant of claim 6, wherein the container (32) is releasably connected mechanically to the engine housing (14) and/or to the landing platform (28).

8. Wind energy plant of one of claims 1 to 7, wherein the container (32) may be lifted or lowered from its position adjacent the engine housing (14) by means of a rope winch.

9. Wind energy plant of claim 8, wherein the rope winch may be attaches to the engine housing (14), the tower or the landing platform (28).

10. Wind energy plant of one of claims 1 to 9, wherein the engine housing (14) comprises a generator and the generator may be housed in the container (32) for temporary storage purposes.

11. Wind energy plant of one of claims 1 to 10, wherein the entire container may be transported to and from the plant and/or changed by means of a helicopter.

## Revendications

1. Eolienne, notamment une éolienne offshore, comportant
- un pylône (12),
- un carter machine (14) monté de manière à pouvoir tourner sur le pylône (12),
- un rotor, qui est monté de manière à pouvoir tourner sur le carter machine (14),
- une plate-forme d'atterrissage (28) montée sur le carter machine (14) et permettant l'atterrissage d'un hélicoptère (34), et
- des moyens de fonctionnement électriques,
**caractérisée par**
- un conteneur (32), dans lequel sont logées au moins des parties des moyens de fonctionnement électriques,
- le conteneur (32) étant disposé d'un côté du carter machine (14), au voisinage de ce dernier.

2. Eolienne selon la revendication 1, **caractérisée en ce que** les dispositifs de commutation pour le couplage et le découplage d'un système formant générateur au réseau d'alimentation en énergie électrique et à partir de ce réseau sont situés dans le conteneur.

3. Eolienne selon la revendication 2, **caractérisée en ce que** les dispositifs de commutation comportent des interrupteurs à basse tension et/ou à moyenne tension et/ou à haute tension.

4. Eolienne selon l'une des revendications 1 à 3, **caractérisée en ce qu'**un transformateur est disposé dans le conteneur (32).

5. Eolienne selon l'une des revendications 1 à 4, **caractérisée en ce qu'**une unité formant mutateur pour faire fonctionner un générateur avec une vitesse de rotation variable est située dans le conteneur (32).

6. Eolienne selon l'une des revendications 1 à 5, **caractérisée en ce que** la plate-forme d'atterrissage (28) située sur au moins un côté du carter de la machine (14) fait saillie au-delà de ce carter et que le conteneur (32) est disposé au-dessous de la partie, qui fait saillie au-delà du carter de la machine (14), de la plate-forme d'atterrissage (28).

7. Eolienne selon la revendication 6, **caractérisée en ce que** le conteneur (32) est relié mécaniquement de façon amovible au carter machine (14) et/ou à la plate-forme d'atterrissage (28).

8. Eolienne selon l'une des revendications 1 à 7, **caractérisée en ce que** le conteneur (32) peut être abaissé à partir de sa position voisine du carter machine (14) ou être soulevé pour venir dans cette position au moyen d'un treuil à câble.

9. Eolienne selon la revendication 8, **caractérisée en ce que** le treuil à câble peut être monté sur le carter machine (14), sur le pylône ou sur la plate-forme d'atterrissage (28).

10. Eolienne selon l'une des revendications 1 à 9, **caractérisée en ce que** le carter machine (14) possède un générateur et que le générateur peut être logé dans le conteneur (32) pour un stockage temporaire.

11. Eolienne selon l'une des revendications 1 à 10, **caractérisée en ce que** le conteneur peut être amené, évacué et/ou remplacé complètement au moyen d'un hélicoptère.
